# EUROPEAN PATENT APPLICATION

(11) **EP 0 787 556 A1**
(43) Date of publication of application: **06.08.1997**
(21) Application number: 97300650.5
(22) Date of filing: 31.01.1997
(51) Int. Cl.: B23K 9/24, H05H 1/34

(54) **Electrode for a plasma-arc torch**

(30) Priority: 02.02.1996 US 595600
(71) Applicant: THERMAL DYNAMICS CORPORATION, St. Louis, MO 63105 (US)
(72) Inventor: Griffith, James L., West Lebanon, New Hampshire 03784 (US); Aher, Barry T., West Lebanon, New Hampshire 03784 (US)
(74) Representative: Brand, Thomas Louis

(57) **Abstract**

An electrode for a plasma-arc torch comprising an elongate copper body one end of which constitutes the forward end electrode as used in the torch, a recess in the body at its forward end, an insert of hafnium in the recess, a portion of the forward end of the body being formed to provide a heat transfer surface of increased area for enhancing cooling of the forward end portion of the body to reduce wear of the electrode during operation of the torch.

## Description

### Background of the Invention

This invention relates to electrodes for plasma-arc torches, and more particularly to an electrode for a plasma-arc torch of the type shown in U.S. Patent No. 4,782,210 issued November 1, 1988 to Thermal Dynamics Corporation of West Lebanon, New Hampshire, entitled Ridged Electrode, hereinafter referred to as the '210 U.S. Patent.

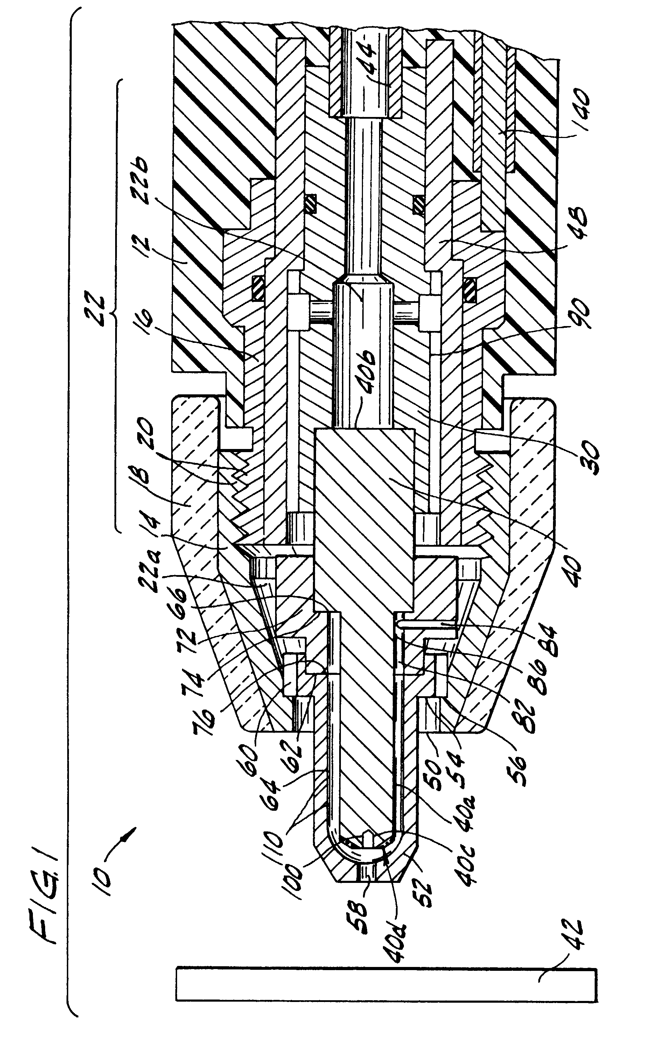

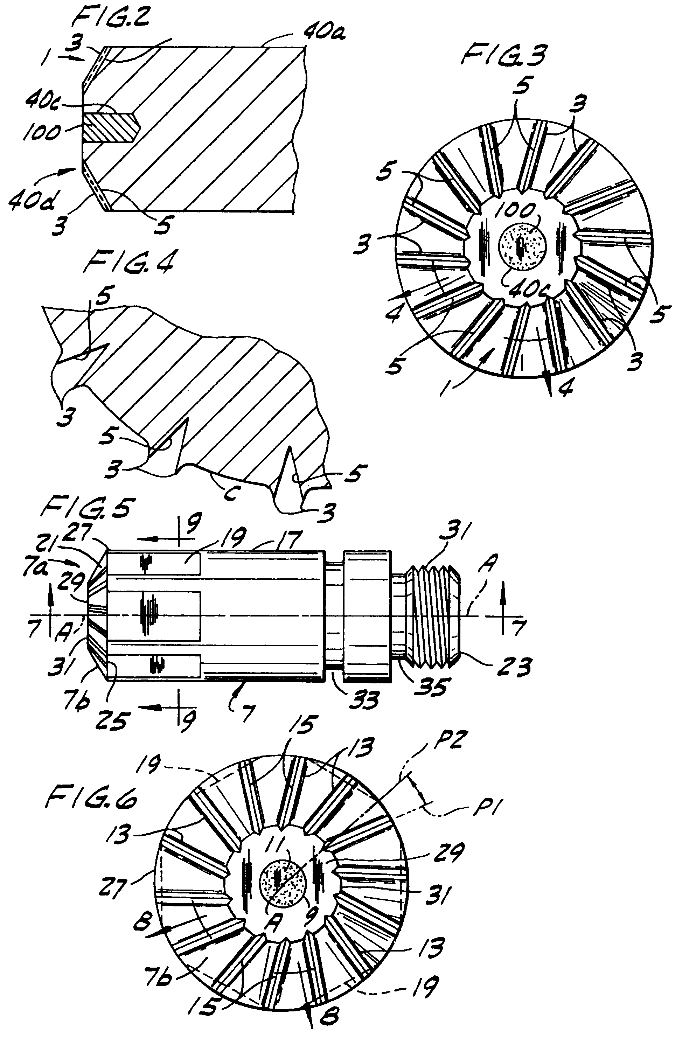

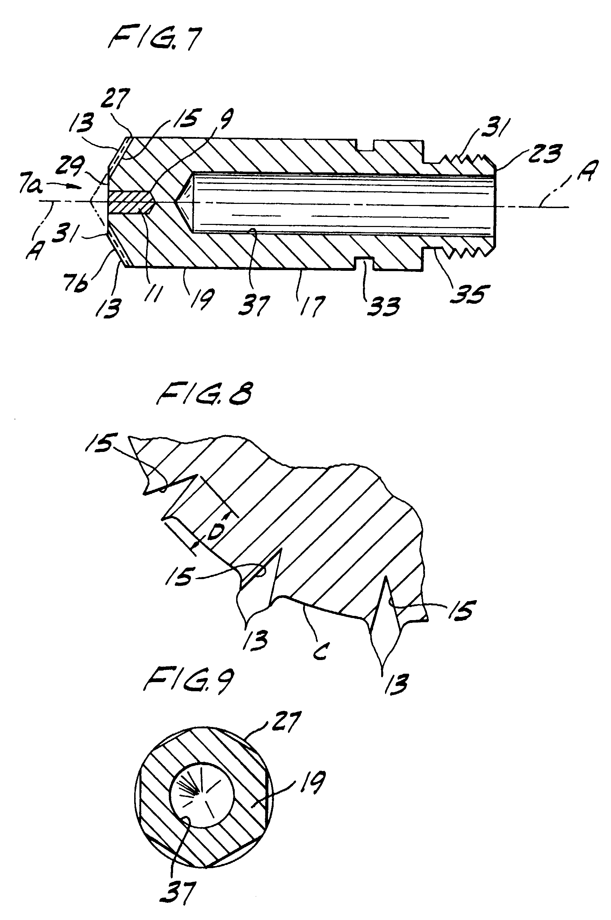

As herein illustrated the invention involves an improvement upon the type of electrode designated 40 in the aforesaid coassigned '210 U.S. Patent, to which reference may be made for details of the type of plasma-arc torch in which the electrode of this invention may be used. The prior electrode 40 shown in Fig. 1 of said prior '210 U.S. Patent generally comprises an elongate copper body having a head and a stem extending from the head, the stem having a recess in its free end, which is its forward end as mounted in the torch, with an insert 100 of hafnium, tungsten or zirconium or alloys thereof in a recess at said forward end. In most of the electrodes of this type used for plasma cutting in industry today the insert is hafnium. In many instances, the use of the hafnium causes a problem because the thermal coefficient of copper is much greater than that of hafnium. The hafnium is inserted in the recess in the forward end of the stem. No matter how much compressive force is used to pack the hafnium in the recess, or how tight the fit of the hafnium may be, the bond between the copper and the hafnium (which may be referred to as a compression bond) is reduced on heating during the firing process of the torch. This is because of differential expansion due to the difference in the coefficients of expansion of the two metals (copper and hafnium). This may result in particles of hafnium and even chunks of hafnium coming out of the recess in the forward end of the stem, thereby resulting in rapid wear of the electrode at its forward end. Also, large particles or chunks coming out of the recess may, in some instances, cause an electrical short which can damage the orifice of the torch. Reduction of the bond is also deleterious in that it may reduce the area of current flow from the copper into the hafnium. When the bond is secure, current is enabled to flow across the entire outer surface of the hafnium. If the bond is insecure, the current is redistributed into areas where the bond is more secure. With the resultant higher current flow per unit of area, the temperature of the metals is increased due to resistance heating (the I²R power loss), which further weakens the bond, creating a runaway condition which causes increased wear and/or failure. Yet another problem which has been encountered with electrodes of the aforementioned prior type is one due to presence of free oxygen directly in front of the hafnium in the recess, with resultant combining of oxygen with the hafnium.

### Summary of the Invention

Accordingly, among the several objects of this invention may be noted the provision of an electrode of improved construction such as to provide for enhanced cooling thereof at its forward end; the provision of an improved electrode of the class described with an insert of hafnium (or the like) in a copper body operable with precise cooling of the metals to reduce the differential expansion of the two different metals at the point where the temperature is potentially the greatest, i.e. in what may be referred to as the plasma formation chamber at the forward end of the torch, thereby reducing the reduction of the bond between the metals to avoid the problem of particles or chunks of the hafnium (or the like) coming out of the recess in the electrode, and further reducing the possibility of the aforesaid runaway condition; and the provision of an electrode of improved construction to break up the flow of gas across the insert of hafnium (or the like) thereby to reduce oxidation of the latter and reduce the rate of wear.

Accordingly, the present invention provides an electrode for a plasma-arc torch, said electrode comprising an elongate electrically conductive body one end of which constitutes the forward end of the electrode, a portion of the forward end of said body having raised and depressed surfaces thereby providing said portion with a heat transfer surface of increased area for enhancing cooling of the forward end portion of the body to reduce wear of the electrode during operation of the torch.

According to the present invention, there is provided an electrode for a plasma-arc torch, said electrode comprising an elongate electrically conductive body one end of which constitutes the forward end of the electrode closest to the tip of the torch, said body having a longitudinal axis and being formed with a recess at its said forward end extending back into said body on its said longitudinal axis, an insert of a refractory metal in said recess, a portion of the forward end of said body surrounding the forward end of the recess having heat transfer elements thereon for enhancing cooling of the forward end portion of the body to reduce unequal expansion of the body and the insert, thereby resulting in enhanced power distribution within the electrode and longer electrode life by allowing more extensive wear of the insert during operation of the torch.

According to the present invention, there is further provided an electrode for a plasma-arc torch, said electrode comprising an elongate electrically conductive body having a forward end which constitutes the forward end of the electrode, said body having a longitudinal axis and being formed with a recess at its said forward end extending back into said body on its said longitudinal axis, an insert of a refractory metal in said recess, a portion of the forward end of said body surrounding the forward end of the recess having channels to direct oxygen flowing past the electrode away from a location immediately adjacent a front end of the insert thereby to reduce oxidation of the insert for longer electrode life during operation of the torch.

According to the present invention, there is provided an electrode for a plasma-arc torch, said electrode comprising an elongate electrically conductive body having a forward end which constitutes the forward end of the electrode, and a plurality of heat transfer elements on a portion of the forward end of said body for enhancing cooling of said portion of the body to reduce wear of the electrode during operation of the torch.

Accordingly, the present invention provides an electrode for a plasma-arc torch, said electrode comprising an elongate electrically conductive body having a forward end which constitutes the forward end of the electrode, characterised in that a portion of the forward end of said body is provided with a plurality of heat and/or gas transfer elements.

It further provides such an electrode wherein said body has a longitudinal axis, a recess at the forward end of the body extending back into the body on its said longitudinal axis, and an insert of a refractory metal in said recess, said portion of the forward end of the body surrounding the forward end of the recess.

The feature of cooling of the forward end of the electrode may be applicable to an electrode without an insert, and to that effect, an electrode of the invention may be generally said to comprise an elongate electrically conductive body one end of which constitutes the forward end of the electrode at the tip of the torch. A portion of the forward end of the body has raised and depressed surfaces thereby providing the portion with a heat transfer surface of increased area to reduce wear of the electrode during operation of the torch.

With regard to an electrode with an insert, an electrode of the invention may be said to comprise generally an elongate electrically conductive body one end of which constitutes the forward end of the electrode closest to the tip of the torch. The body has a longitudinal axis and is formed with a recess at its said forward end extending back into the body on the longitudinal axis. An insert of a refractory metal is in the recess, and a portion of the forward end of the body surrounding the forward end of the recess has heat transfer elements thereon for enhancing cooling of the forward end portion of the body to reduce unequal expansion of the body and the insert. This results in enhanced power distribution within the electrode and longer electrode life during operation of the torch.

Further in regard to an electrode with an insert, an electrode of the invention may be said to comprise an elongate electrically conductive body having a forward end which constitutes the forward end of the electrode. The body has a longitudinal axis and is formed with a recess at its said forward end extending back into the body on the longitudinal axis. An insert of a refractory metal is in said recess, and a portion of the forward end of the body surrounding the forward end of the recess has channels to direct oxygen flowing past the electrode away from a location immediately adjacent a front end of the insert. This reduces oxidation of the insert for longer electrode life during operation of the torch.

Other objects and features will be in part apparent and in part pointed out hereinafter.

### Brief Description of the Drawings

Fig. 1 is an enlargement of Fig. 1 of the aforesaid '210 U.S. Patent illustrating the plasma-arc torch of said patent with an electrode similar to the electrode 40 shown therein embodying one preferred embodiment of the improvement according to this invention;
Fig. 2 is an enlarged fragment of Fig. 1 showing the forward end of the electrode with the improvement according to one preferred embodiment of the invention;
Fig. 3 is a front end view of one preferred embodiment of the electrode of the invention taken from the left of Fig. 2 and further enlarged;
Fig. 4 is a view generally in section on line 4--4 of Fig. 3 and further enlarged;
Fig. 5 is a view in side elevation of an electrode of this invention in a presently preferred mode thereof;
Fig. 6 is a view of the forward (left) end of the Fig. 5 electrode on a larger scale than Fig. 5;
Fig. 7 is a longitudinal section on line 7--7 of Fig. 5;
Fig. 8 is a view generally in section on line 8--8 of Fig 6 on a larger scale than Fig. 6; and
Fig. 9 is a view in transverse cross section on line 9--9 of Fig. 5.

Corresponding reference characters indicate corresponding parts throughout the drawing in several views of the drawings.

### Detailed Description

Referring to the drawings, Fig. 1 is an enlargement of Fig. 1 of the aforesaid '210 U.S. Patent showing the plasma-arc torch as disclosed in said patent including an electrode such as designated 40 in said patent, with the electrode having the improvement of this invention added thereto. In Fig. 1, the reference numerals of Fig. 1 of said '210 patent are retained, and full disclosure may be ascertained from said patent. It will suffice here to state that the electrode 40 comprises an elongate electrically conductive body, preferably of copper, having a stem or shank 40a of cylindrical cross section with a head 40b of cylindrical cross section at one end of the shank constituting its rearward end in relation to the plasma-arc torch (its right end as viewed in Fig. 1). The shank has a recess 40c in its other end, i.e. its forward end. Compressed in this recess is an insert 100 of metal material having good longevity at high temperatures such as hafnium, tungsten, or zirconium or alloys thereof. Generally, the insert comprises a mass of hafnium, tungsten, or zirconium. The torch includes a cup 14 encased in an insulating shield 18, and has a tip 52, (which in some embodiments extends forward out of the cup), this tip having an orifice 58. The shank 40a of the electrode 40 extends into the torch tip with an annular space 64 between the shank and the torch tip for flow of gas to the orifice 58. The head 40b of the electrode 40 is secured in electrode body 30. Further detail may be ascertained from said '210 U.S. Patent.

The forward end 40d of the shank 40a is shown in Figs. 1-4 modified in respect to the form shown for the shank in the aforesaid '210 patent in accordance with the principles of this invention, the modification involving the formation of an annular portion 1 of the forward end of the shank surrounding the recess 40c with raised and depressed surfaces 3 and 5, sometimes referred to as extended surfaces thereby providing said portion with a heat transfer surface of increased area for enhancing cooling of the forward end of the shank to offset unequal expansion of the shank (copper) and the insert 100 (hafnium). These raised and depressed surfaces are provided by pairs of ridges also referred to by the reference numeral 3 on said portion of the shank and grooves also referred to by the numeral 5 between the pairs of ridges 3, the ridges acting as heat-transfer fins on said portion of the shank. As shown best in Fig. 4, the ridges or fins 3 and the grooves 5 between paired ridges are such as formed by knurling the annular portion 1 of the forward end of the shank. Although illustrated as fins and grooves, it is contemplated that the raised and depressed surfaces 3 and 5 may be formed of posts (providing the appearance of a wire brush, for example), facets, raised dimples or any other structural feature which would extend or increase the surface area of the annular portion 1.

Referring to Figs. 5-9, there is shown an electrode of this invention of the presently preferred form, comprising an elongate electrically conductive body designated in its entirety by the reference numeral 7, preferably made of copper. One end 7a of this body, viz. its left end as illustrated in Figs. 5 and 7, constitutes its forward end at the tip of the torch in which it is used. The body 7 has a longitudinal axis A and is formed with recess 9 at its forward end 7a extending back into the body a relatively short distance on said longitudinal axis. An insert 11 of a refractory metal, preferably hafnium, is provided in this recess. This insert has a thermal coefficient of expansion different from that of the body 7 and, as to hafnium, a coefficient much lower than that of copper. In accordance with this invention, an annular portion 7b of the forward end 7a of the body 7 surrounding the recess 9 has raised and depressed surfaces 13 and 15 (corresponding to the raised and depressed surfaces 3 and 5 shown in Fig. 4) thereby providing said portion 7b with a heat transfer surface of increased area for enhancing cooling of the forward end 7a of the body 7 to reduce unequal expansion of the body and the insert such as may occur due to the differing thermal coefficient of expansion of the copper of the body and the hafnium of the insert.

More particularly with regard to the electrode shown in Figs. 5-9, the body 7 is constituted by a relatively short length of an electrically conductive metal, preferably copper, having a portion 17 of cylindrical cross section, a portion 19 of generally hexagonal wrench-accepting cross section corresponding to the cross section of the cylindrical portion 17 extending forward from the latter, with an end portion 21 having the shape of a frustum of a cone at the forward end of the hexagonal portion 19, and a cylindric extension 23 of smaller diameter than cylindrical portion 17 extending rearward from the latter and coaxial therewith. The frustum-shaped end portion 21 has what may be referred as its base 25 which has a periphery 27 of the same diameter as the cylindrical portion 17 of body 7. The forward-facing conical surface of the frustum-shaped end portion of the body 7 constitutes the aforesaid portion 7b. The frustum-shaped end portion of the body 7 has a flat end 29 of smaller diameter than the base 25 of the frustum, the boundary 31 of this flat end of the frustum being referred to as the inner periphery of portion 7b of the body 7. In the embodiment illustrated, a transverse cross section of the portion 21, including periphery 27 or boundary 31, defines a circumference which lies along a circle C so that the raised and depressed surfaces 13 and 15 are spaced about the circle C. It is contemplated that the circumference could take a non-circular shape, such as a polygonal shape without departing from the scope of the invention.

The recess 9 extends back into the body from the flat end 29 of the frustum a relatively short distance on the longitudinal axis A of the body 7, being of circular cross section of smaller diameter than the diameter of the flat end 29 of the frustum. Thus, the inner periphery 31 of the said forward end portion 7b of the body is of larger diameter than and spaced outward from the recess, said forward flat end portion 29 being of generally annular flat form in a transverse plane of the body surrounding the recess. The inner periphery 31 of the frusto-conical portion 7b is at the apex of the frustum and the outer periphery 27 of said portion 7b is at the base 25 of the frustum. Thus, the inner and outer peripheries of the frusto-conical portion 7b are in planes transverse to the longitudinal axis A of the body 7 with the plane of the outer periphery 27 spaced back from the plane of the inner periphery 31.

The frusto-conical shaped forward end portion or forward end face 7b of the body 7 is provided with the raised surfaces 13 as ridges (also designated 3) and the depressed surfaces 15 as grooves (also designated 5) between pairs of the ridges 13 extending between the inner periphery 31 and the outer periphery 27 of the frusto-conical end portion 7b of the body 7 at its forward end. The ridges 13 act as heat-transfer fins on said portion 7b of the body surrounding the recess 9. The grooves and fins may be formed by knurling the frusto-conical end portion 7b, the grooves 15 being of generally uniform depth throughout their length. The use of a knurl at the forward end of the electrode increases the surface area of the electrode without reducing the total cross sectional area. By gaining a significant amount of surface area (greater than a factor of two), the invention greatly increases the cooling of the end of the electrodes which is precisely where the cooling is needed. The raised and depressed surfaces 13 and 15 at the forward end of the electrode affect the cooling in multiple ways. First, surfaces 13 and 15 increase cooling via an increase in surface area as seen in Newton's law of cooling: q=hA(Ts-Tf) where h is the heat transfer coefficient, A is the surface area, Ts is the temperature of the surface, and Tf is the temperature of the fluid. Second, surfaces 13 and 15 provide better electrical distribution in the hafnium/copper interface reducing the amount of resistance (I²R) heating. If the copper is cooler, it makes better electrical contact as well as thermal contact. This means that current can flow further down the copper portion (less resistance) before exiting into the hafnium. This results in less heat being generated in the electrode.

Fourteen grooves are shown in Fig. 6. The number of grooves of the embodiment illustrated in Fig. 6 is 14, although any number of grooves which increases surface area would be acceptable. For an electrode as shown in Figs. 5-9 wherein the cylindrical portion 17 and the outer periphery 27 of the frusto-conical forward end formation 21 have a diameter in the range of approximately 0.508 - 1.27 cm (0.20-0.50 inch) and preferably 1.016 cm (0.400 inch), the conical forward face of the frustum is generally at an angle of 60° to the longitudinal axis A of the electrode, and the inner periphery 31 of the frusto-conical forward end formation has a diameter of approximately 0.475 cm (0.187 inch), the depth D of the grooves is preferably in the range of 0.0254 - 0.0559 cm (0.010-0.022 inch), and more particularly approximately 0.0381 cm (0.015 inch) for a 140 amp electrode. The grooves, as shown, are generally of V-shape extending in from the conical surface of portion 7b for most of their depth. A depth D of less than 0.0254 cm (0.010 inches) may not be as effective for extending electrode life and a depth of greater than 0.0559 cm (0.022 inches) may start to affect the quality of the electrode cut, depending on the actual electrode design and dimensions.

The volume between the electrode and the plasma gas tip sets the gas velocity because the gas has a constant volume so that greater depths D tend to reduce velocity of the plasma gas. In addition, if the raised surfaces are higher, the tip surface must be moved to be further away from the electrode to prevent short circuiting, which also causes an increase in volume and a decrease in velocity.

As appears in Fig. 6, each groove 15 is in a plane P1 at an angle to a radial plane P2 through the inner end of the groove and each fin 13 is also in a plane at a corresponding angle to the radial plane through the inner end of the fin, the grooves and fins thereby being skewed with respect to generatrices of the frustum 21.

The extension 23 at the rear end of the body 7 is externally threaded as indicated at 31 for being removably threadedly secured in a tapped hole in an electrode body corresponding to the electrode body designated 30 in Fig. 1 of this application and in the aforesaid '210 U.S. Patent. The cylindrical portion 17 of the body 7 has an annular peripheral groove 33 adjacent its rearward end for an O-ring, and the extension 23 has an annular groove 35 for an O-ring at its juncture with the rearward end of the cylindrical portion. Body 7 has an axial bore 37 extending forward from its rearward end terminating short of the recess 9.

The formation of the forward end portion 7b of the electrode with the fins 13 and grooves 15 provides a heat transfer surface of corrugated form and thus of increased surface area in relation to the surface area of the forward end of the stem of the electrode 40 of the aforesaid '210 U.S. Patent to provide for enhanced or precise cooling of the copper and hafnium at the forward end of the electrode, in contrast to the conditions at the forward end of an electrode such as shown in the aforesaid '210 U.S. Patent.

Thus, said forward end portion 7b of the body 7 has heat transfer elements thereon (fins 13 and the surfaces in the grooves 15) for enhancing cooling of the forward end portion of the body to reduce unequal expansion of the body and the insert, thereby resulting in enhanced power distribution and longer electrode life during operation of the torch. The invention also tends to allow electrodes to have a longer useful life. As the insert becomes smaller, it must handle the same amount of current so that the insert eventually fails because the current exceeds the current carrying capacity of the insert. In the prior art, inserts of 3.048 mm (120 mils) in transverse length would tend to fail when reduced to a size of about 2.032 to 1.016 mm (80 to 40 mils). In contrast, the invention has been shown to allow up to 2.54 mm (100 mils) of wear so that an insert of 3.048 mm (120 mils) could wear down to 0.508 mm (20 mils) before failing, allowing more extensive wear of the insert and the electrode. The invention also increases the number of starts per electrode by up to tenfold.

Also, the grooves or channels 15 in said forward end portion 7b direct oxygen flowing past the electrode away from a location immediately adjacent a front end of the insert thereby to reduce oxidation of the insert for longer electrode life during operation of the torch, as illustrated by the phantom lines at the front end of the electrode in Fig. 7. The knurl breaks up the flow of plasma gas across the hafnium. The preferred condition directly in front of the hafnium would be a dead space where there is no free oxygen to combine with the hafnium. The knurl aids in establishing this condition by breaking up the gas stream. Any oxygen is ionized upon firing of the electrode and the gas is less able to "wash" the surface.

In view of the above, it will be seen that the several objects of the invention are achieved and other advantageous results attained.

## Claims

1. An electrode (40) for a plasma-arc torch, said electrode (40) comprising an elongate electrically conductive body (40a; 7) having a forward end (40d; 7a) which constitutes the forward end of the electrode (40), characterised in that a portion (7b) of the forward end (40d; 7a) of said body (40a; 7) is provided with a plurality of heat and/or gas transfer elements (3, 5; 13; 15).

2. An electrode (40) according to claim 1, characterised in that said body (40a; 7) has a longitudinal axis, a recess (40c; 9) at the forward end (40d; 7a) of the body (40a; 7) extending back into the body (40a; 7) on its said longitudinal axis, and an insert (100; 11) of a refractory metal in said recess (40c; 9), said portion (7b) of the forward end (40d; 7) of the body (40a; 7) surrounding the forward end of the recess (40c; 9).

3. An electrode (40) according to claim 2, characterised in that, the transfer elements (3, 5; 13, 15) comprise heat transfer elements effective for enhancing cooling of the forward end portion (7b) of the body (40a; 7) to reduce unequal expansion of the body and the insert (100; 11), thereby resulting in enhanced power distribution within the electrode (40) and longer electrode life by allowing more extensive wear of the insert (100; 11) during operation of the torch.

4. An electrode (40) according to claim 2 or claim 3, characterised in that the transfer elements (3, 5; 13, 15) comprise gas transfer elements in the form of channels (15) effective to direct oxygen flowing past the electrode (40) away from a location immediately adjacent a front end of the insert (100; 11) thereby to reduce oxidation of the insert (100; 11) for longer electrode life during operation of the torch.

5. An electrode (40) according to any one of claims 1 to 4, characterised in that the transfer elements (3, 5; 13, 15) comprise heat transfer elements comprising raised (3; 13) and depressed (5, 15) surfaces on said portion of the forward end (40d; 7a) of the body (40a; 7), thereby providing said portion (7b) with a heat transfer surface of increased area for enhancing cooling of the forward end portion (7b) of the body (40a; 7) to reduce wear of the electrode (40) during operation of the torch.

6. An electrode (40) according to claim 5, characterised in that said raised (3; 13) and depressed (5; 15) surfaces are provided by ridges (3; 13) on said portion of the forward end (40d; 7a) of the body (40a; 7) and grooves (5; 15) between the ridges (3; 13), said ridges (3; 13) acting as heat-transfer fins on said portion (7b) of the body (40a; 7).

7. An electrode (40) according to claim 4, characterised in that said channels (15) are formed by grooves (15) in the forward end (40d; 7a) of the body (40; 7).

8. An electrode (40) according to claim 7, characterised in that said grooves (15) are located between generally parallel ridges (13) extending longitudinally with respect to the body (40a; 7) along said portion (7b) of the forward end (40d; 7a) of the body (40a; 7).

9. An electrode (40) according to any one of claims 6 to 8, characterised in that each groove (5; 15) has a depth of between 0.0254 and 0.0559 cm.

10. An electrode (40) according to claim 8, characterised in that each groove (5; 15) has a depth of approximately 0.0381 cm.

11. An electrode (40) according to any one of claims 6 to 10, characterised in that it comprises 14 grooves (5; 15).

12. An electrode (40) according to any one of claims 2 to 11, characterised in that said insert (100; 11) has a lower thermal coefficient of expansion that said body (40a; 7).

13. An electrode (40) according to any one of claims 1 to 12, characterised in that the body (40a; 7) of said electrode (40) rearward of said portion (7b) of the forward end (40d; 7a) has a diameter in the range from 0.508 cm to 1.27 cm.

14. An electrode (40) according to any one of claims 1 to 13, characterised in that said portion (7b) of the forward end (40d; 7a) of said body (40; 7) has an inner periphery (31) and an outer periphery (27) at the periphery of the forward end (40d; 7a) of said body (40a; 7), the transfer elements (3, 13; 5, 15) extending between the said inner periphery (31) and the said outer periphery (27) of said portion (7b) of the forward end (40d; 7a) of said body (40a; 7).

15. An electrode (40) according to claim 14, characterised in that said portion (7b) of the forward end (40d; 7a) of said body (40a; 7) is of such shape that its inner (31) and outer (27) peripheries are in planes transverse to the longitudinal axis of the body (40a; 7) with the plane of the outer periphery (31) spaced back from the plane of the inner periphery (27).

16. An electrode (40) according to claim 15, characterised in that said portion (7b) of the forward end (40d; 7a) of said body (40a; 7) is in the form of a frustum of a cone, said inner periphery (31) of said portion thereby being at the apex of the frustum and said outer periphery (27) of said portion (7b) thereby being at the base of the frustum.

17. An electrode (40) according to claim 16, characterised in that) each transfer element (3, 5; 13, 15) has an inner end at the apex of the frustum and an outer end at the base of the frustum.

18. An electrode (40) as set forth in claim 17, characterised in that each transfer element (3, 5; 13, 15) is in a plane at an angle to a radial plane through the inner end of the transfer element (3, 5; 13, 15), the transfer elements (3, 5; 13, 15) thereby being skewed with respect to generatrices of the frustum.

19. An electrode (40) according to claim 18, wherein said body (40a; 7) has a longitudinal axis and a recess (40c; 9) at the forward end (40d; 7a) of the body (40a; 7) extending back into the body (40a) on its said longitudinal axis, characterised in that the recess (40c; 9) is of circular cross section, the inner periphery (31) of said forward end (40d; 7a) of the body (40a; 7) being of larger diameter than and spaced outward from the recess (40c; 9), the forward end (40d; 7a) of the body being generally flat in a transverse plane of the body (40a; 7).

20. An electrode (40) according to claim 19, characterised in that the body (40a; 7) is a one-piece relatively short length of copper having a portion (17) of cylindrical cross section, a portion (19) of hexagonal cross section extending from one end of the cylindrical portion (17), with said frustum at the outer end of said hexagonal portion (19), said insert (100; 11) comprising hafnium compressed in said recess (40c; 9).

21. An electrode according to any one of claims 1 to 20, characterised in that said transfer elements are knurled formations.
